# EUROPÄISCHE PATENTSCHRIFT

(11) **EP 0 764 599 B1**
(45) Veröffentlichungstag und Bekanntmachung des Hinweises auf die Patenterteilung: **11.10.2000**
(21) Anmeldenummer: 96118544.4
(22) Anmeldetag: 12.07.1994
(51) Int. Cl.: B65G 47/26, B65G 17/24

(54) **Stauförderkette**
Accumulation conveyor chain
Chaîne pour convoyeur à accumulation

(30) Priorität: 16.12.1993 DE 9319371 U
(43) Veröffentlichungstag der Anmeldung: 26.03.1997
(62) Teilanmeldung aus: 94110827.6
(73) Patentinhaber: JOH. WINKLHOFER & SÖHNE GmbH & Co KG, D-81369 München (DE)
(72) Erfinder: Heinrich, Dag, 82377 Penzberg (DE)
(74) Vertreter: Grünecker, Kinkeldey, Stockmair & Schwanhäusser Anwaltssozietät

(56) Entgegenhaltungen:
- EP-A- 0 319 720
- GB-A- 2 163 718
- US-A- 2 906 390

## Beschreibung

Die Erfindung betrifft eine Stauförderkette der im Oberbegriff des Patentanspruchs 1 angegebenen Art.

Bei einer aus dem Prospekt "IWIS-Ketten, Stauförderketten SF" der Firma Joh. Winklhofer & Söhne bekannten Stauförderkette ist auf der Buchse jedes zweiten Gelenks eine Kunststoff-Förderrolle gelagert, und zwar zwischen den beiden Innenlaschen. Alle Gelenkbolzen sind über die Außenlaschen hinaus verlängert und tragen auf beiden Enden eine Laufrolle. Bei gegebener Außenabmessung der Gelenkkette ist die Breite jeder Förderrolle durch den Innenabstand zwischen den Innenlaschen begrenzt. Bei Belastung der Förderrollen werden die Laufrollen auf den zwischen jeweils zwei Förderrollen angeordneten Gelenkbolzen nicht nennenswert belastet. Bei einem Stau können diese Laufrollen jedoch wegen der darunterliegenden Abstützung für die Laufrollen nicht nach unten ausweichen. Die Bauweise ist aufwendig und vielteilig. Das Gewicht der Stauförderkette pro Längeneinheit ist relativ hoch. Die Laufrollen werden durch Unterlegscheiben gegen Abziehen gesichert, wobei die Unterlegscheiben durch die in einer Durchmesserebene kaltverformten Enden der Gelenkbolzen abgestützt sind.

Ähnliche Stauförderketten sind bekannt aus: DE-C1-34 06 352; DE-A1-34 38 786; DE-A1-32 36 577; DE-U-82 16 554; GB-A-2 163 718.

Der Erfindung liegt die Aufgabe zugrunde, eine Stauförderkette der eingangs genannten Art zu schaffen, die kostengünstig herstellbar und leicht ist, aus wenigen Einzelteilen besteht und sich universell einsetzen läßt.

Die gestellte Aufgabe wird erfindungsgemäß mit den im Patentanspruch 1 enthaltenen Merkmalen gelöst.

Durch die Verlegung der Innenlasche bzw. des Innenlaschenpaares in die Längsmitte der Stauförderkette lassen sich die äußeren Grenzen der Lauffläche der Förderrolle weiter nach außen setzen, da die Förderrollenbreite nicht mehr durch den Abstand zwischen den Innenlaschen, sondern durch den weiteren Abstand zwischen den Außenlaschen begrenzt ist. Außerdem ergibt sich eine geöffnete Struktur der Stauförderkette, die für bestimmte Anwendungsfälle wünschenswert sein kann. Es läßt sich nur je eine Förderrolle bei einem Gelenk vorsehen und die nächstfolgende Förderrolle auf der anderen Seite der Innenlasche oder des Innenlaschenpaares anordnen. Es entsteht eine relativ zusammenhängende Förderfläche für das Fördergut. Es ist aber auch denkbar, die Abstände zwischen den Förderrollen in Kettenlängsrichtung zu vergrößern, z.B. für große und leichtgewichtige Fördergüter, um die Stauförderkette noch leichter, beweglicher und kostengünstiger auszubilden. Die Stauförderkette wird leichter als herkömmliche Stauförderketten gleicher Grundabmessungen und erzeugt ein leiseres Laufgeräusch.

Die Ausführungsform gemäß Anspruch 2 ist zweckmäßig, weil einerseits kräftige und belastbare Innenlaschen und andererseits optimal große Förderrollen benutzt werden können, was für bestimmte Anwendungszwecke von Vorteil ist. Außerdem wird durch die Überlappung eine Führung der Förderrollen unter extremen Belastungen oder beim Verkanten gebildet.

Die Ausführungsform gemäß Anspruch 3 zeichnet sich durch eine weitere Verringerung der Einzelteile und eine Verringerung der Gesamtbreite der Kette aus. Durch den Wegfall der bisher üblichen Unterlegscheiben zur Abziehsicherung der Laufrollen wird an jeder Kettenseite Platz gespart. Die Aufgabe der Abziehsicherung wird von den verdickten Enden direkt übernommen. Ferner wird durch diese Maßnahme Gewicht eingespart und die Montage der Stauförderkette vereinfacht.

Bei der Ausführungsform gemäß Anspruch 4 wird auf bisher nicht übliche Weise für eine zuverlässige Abziehsicherung der Laufrollen gesorgt. Durch die Stauchungen oder Nietungen in mindestens zwei zueinander versetzten Durchmesserebenen des Gelenkbolzens (ggfs. mehrfache Dachnietung) wird bei relativ geringer Stauchung eine nahezu über den gesamten Umfang wirksame Abziehsicherung jeder Laufrolle erreicht.

Die Ausführungsform gemäß Anspruch 5 zeichnet sich durch Wartungsfreiheit oder zumindest Wartungsarmut aus, da die Werkstoffe mit selbstschmierenden Eigenschaften hohe Standzeiten ohne Schaden für die Stauförderkette gewährleisten, ohne daß von Hand oder mit Schmiereinrichtungen nachgeschmiert werden müßte. Die Beläge oder Büchsen, die für die Schmierung bzw. Dauerschmierung verantwortlich sind, werden überall dort eingesetzt, wo Komponenten der Stauförderkette im Betrieb aneinander reiben oder sich relativ zueinander bewegen.

Eine weitere, vorteilhafte Ausführungsform geht schließlich aus Anspruch 6 hervor. Der die Innenlasche oder das Innenlaschenpaar repräsentierende Formteil läßt sich mit modernen Fertigungsverfahren formgenau, gestaltfest und gegebenenfalls leichtgewichtig herstellen, wodurch einige Bearbeitungsschritte bei der Herstellung der Stauförderkette eingespart werden.

Gemäß Anspruch 7 ergibt sich eine Förderfläche ohne ausgeprägte "Täler". Die aufeinanderfolgenden Förderketten können sich - in einer Seitenansicht - mit mit ihren Umrissen überlappen.

Anhand der Zeichnung werden Ausführungsformen der Erfindung erläutert. Es zeigen:
- Fig. 1: einen Schnitt einer Stauförderkette in der Ebene der Gelenkachse,
- Fig. 2: eine um 90° gedrehte Seitenansicht zu Fig. 1, und
- Fig. 3: eine Ausführungsvariante im Schnitt.

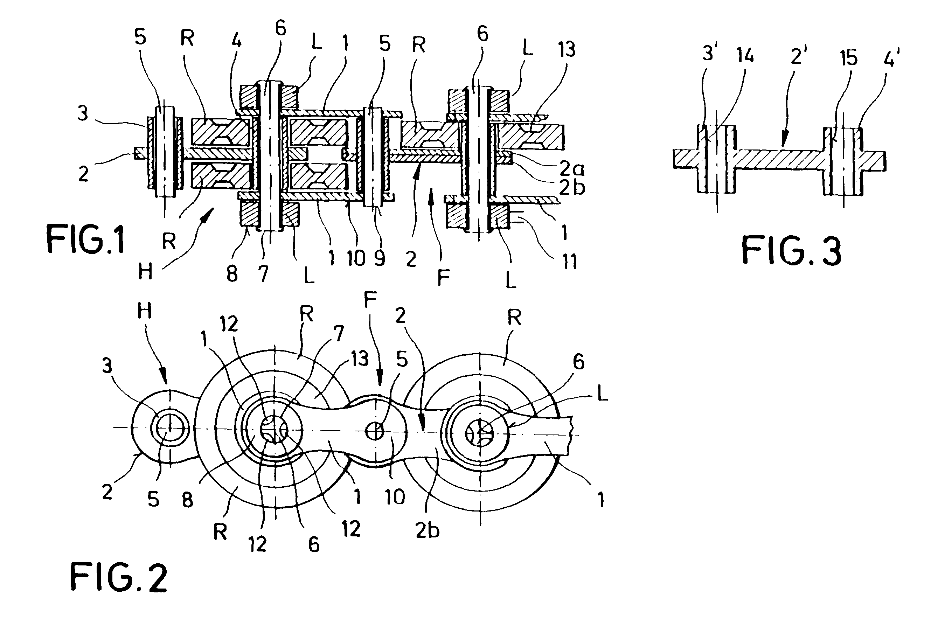

Eine Stauförderkette F gemäß den Fig. 1 und 2 ist aufgebaut auf einer herkömmlichen Gelenkkette H, bestehend aus Außenlaschen 1, Innenlaschen 2, in die Innenlaschen 2 eingepreßte Buchsen 3, 4, in den Buchsen 3, 4 drehbar gelagerten, in die Außenlaschen 1 eingepreßten, kurzen Gelenkbolzen 5 und aus über die Außenlaschen 1 hinaus verlängerten Gelenkbolzen 6. Es könnte jedoch auch eine Hohlbolzen-Gelenkkette mit hohlen Gelenkbolzen anstelle der Gelenkbolzen 5 und/oder 6 verwendet werden.

Abweichend zur normalen Bauweise ist eine Innenlasche 2 in der Mitte zwischen den beiden Außenlaschen 1 vorgesehen. In der rechten Hälfte von Fig. 1 ist angedeutet, daß zwei Innenlaschen 2a, 2b ein Innenlaschenpaar 2 bilden. Die Stauförderkette F wird entweder mit der Innenlasche 2 oder mit dem Innenlaschenpaar 2 durchgehend ausgestattet. Als Detailvariante ist in Fig. 3 eine einteilig mit den Buchsen 3' und 4' ausgebildete Innenlasche 2' gezeigt, wobei die Bohrungen 14, 15 in den Buchsen 3', 4' entweder gleich eingeformt oder nachträglich, z.B. durch Stoßen oder ähnliches, gebildet werden. Die Innenlasche 2, 2' kann beispielsweise durch Pressen, Fließpressen, Schmieden und Gesenkschmieden, Sintern oder dgl. hergestellt werdenn, und zwar aus metallischen Werkstoffen, aus Sinterwerkstoffen oder auch aus Kunststoff oder verstärktem Kunststoff, und gegebenenfalls sogar aus einem Material mit selbstschmierenden Eigenschaften.

Bei der gezeigten Ausführungsform ist bei jedem zweiten Gelenk eine Förderrolle R bzw. sind zwei Förderrollen R paarweise in den Zwischenräumen zwischen den Außenlaschen 1 und der Innenlasche 2 bzw. dem Innenlaschenpaar 2 bzw. 2' angeordnet, die frei drehbar auf der Buchse 4 gelagert ist bzw. sind. Auf dem Gelenkbolzen 6 in der Buchse 4 sind auf beiden freien Enden Laufrollen L frei drehbar gelagert, die dadurch abziehgesichert sind, daß die Enden 7 der verlängert ausgebildeten Gelenkbolzen 6 durch Kaltverformen unmittelbar bei Stirnseiten 8 der Laufrollen L verdickt sind. Zweckmäßigerweise wird in zwei zueinander versetzten Durchmesserebenen der Enden 7, bezogen auf die Achse des Gelenkbolzens 6, gestaucht oder genietet, um eine allseitige Abziehsicherung für die Laufrolle L zu schaffen (Fig. 2, Bezugszeichen 12 für die mehreren in Umfangsrichtung über das Ende 7 verteilten Stauchungen oder Nietungen, z.B. mehrfache Dachnietung).

Gemäß den Fig. 1 und 2 sind die Förderrollen R jeweils auf jedem zweiten Gelenk vorgesehen. Dies ist aber nicht unbedingt erforderlich, die Teilung der Förderrollen könnte auch größer und sogar unregelmäßig gewählt werden.

Wie in der rechten Hälfte von Fig. 1 angedeutet, könnte auch eine einzige Förderrolle R pro Buchse 4 vorgesehen sein, wobei zweckmäßigerweise von einem Gelenk zum anderen die Förderrollen R zueinander versetzt bzw. jeweils an der anderen Seite der Innenlasche bzw. des Innenlaschenpaares 2 angeordnet werden.

Die bei der gezeigten Ausführungsform verwendeten Förderrollen R bestehen zweckmäßigerweise aus einem Kunststoff und sind mit gewichtssparenden Ausnehmungen 13 versehen.

Die Förderrollen R bestehen zweckmäßigerweise aus einem Kunststoff mit selbstschmierenden Eigenschaften, so daß sie wartungsarm laufen. Gegebenenfalls sind, falls aus Metall bestehende Förderrollen verwendet werden, in diese selbstschmierende Büchsen aus Kunststoff eingepreßt. Um die Stauförderkette F wartungsfrei oder zumindest wartungsarm auszubilden, sind zweckmäßigerweise zwischen den zueinander beweglichen Komponenten der Stauförderkette Platten, Büchsen oder Beläge aus Werkstoffen mit selbstschmierenden Eigenschaften vorgesehen. So könnten beispielsweise die Buchsen 3, 4 innen mit Belägen oder Büchsen aus selbstschmierenden Werkstoffen ausgekleidet sein und auch die Laufrollen L bzw. die Förderrollen R. Aufgrund solcher selbstschmierenden Komponenten (Sinter- oder Kunststoffmaterial) entsteht an den Berührungspunkten in den Gelenken kein Passungsrost.

Die Außenränder der Laufflächen der Förderrollen R liegen benachbart zu den Innenseiten der Außenlaschen 1, so daß sich für das Fördergut auf den Förderrollen R optimal breite Auflagebereiche ergeben.

## Patentansprüche

1. Stauförderkette, mit einer Gelenkkette mit über hohle oder massive Gelenkbolzen gekuppelten, abwechselnden Innen- und Außenlaschen, bei denen die Buchsen in den Innenlaschen und die die Buchsen drehbar durchsetzenden Gelenkbolzen in den Außenlaschen festgelegt sind, wobei auf entlang der Kettenlänge vorbestimmten Buchsen großdurchmeßrige Förderrollen und auf über ihre Buchsen nach außen verlängerten Gelenkbolzen beidseitig kleinere Laufrollen gelagert sind, dadurch gekennzeichnet, daß jeweils eine Innenlasche oder ein Innenlaschenpaar (2, 2') in der Längsmitte der beiden in Kettenlängsrichtung benachbarten Buchsen (3, 4) im Abstand zu den Außenlaschen (1) angeordnet ist, und daß an wenigstens einer Außenseite der Innenlasche bzw. des Innenlaschenpaares (2, 2') eine Förderrolle (R) zwischen der Innenlasche bzw. dem Innenlaschenpaar (2, 2') und der Außenlasche (1) angeordnet ist.

2. Stauförderkette nach Anspruch 1, **dadurch gekennzeichnet**, daß sich der Umriß der Innenlasche bzw. des Innenlaschenpaares (2, 2') mit dem Umriß der Förderrolle (R) auf der Buchse (4) der nächstfolgenden Innenlasche bzw. des Innenlaschenpaares (2, 2') überlappt.

3. Stauförderkette nach wenigstens einem der Ansprüche 1 und 2, **dadurch gekennzeichnet**, daß zur Abziehsicherung jeder Laufrolle (L) das freie Ende (7) des verlängerten Gelenkbolzens (6) direkt an der Stirnseite (8) der Laufrolle (L) durch Kaltverformen, z.B. durch Stauchen, Vernieten oder dgl., verdickt ausgebildet ist.

4. Stauförderkette nach Anspruch 3, **dadurch gekennzeichnet**, daß das freie Ende (7) durch Stauchen in mindestens zwei um die Achse des Gelenkbolzens (6) zueinander versetzten DurchmesserEbenen (12) (z.B. mehrfache Dachnietung) kaltverformt ist.

5. Stauförderkette nach den Ansprüchen 1 bis 7, **dadurch gekennzeichnet**, daß zwischen relativ zueinander beweglichen Komponenten der Stauförderkette (S) Beläge oder Büchsen aus Werkstoffen mit selbstschmierenden Eigenschaften wie Kunststoff, Keramik oder Sintermaterial vorgesehen sind.

6. Stauförderkette nach Anspruch 1, **dadurch gekennzeichnet**, daß die Innenlasche oder das Innenlaschenpaar (2') mit den beiden Buchsen (3', 4') ein einteiliger und durch Pressen, Fließpressen, Schmieden, Gesenkschmieden, Sintern oder dgl. hergestellter Formteil ist.

7. Stauförderkette nach wenigstens einem der Ansprüche 1 bis 6, **dadurch gekennzeichnet**, daß pro Buchse (4) eine einzige Förderrolle (R) vorgesehen ist, und von einem Gelenk zum anderen die Förderrollen (R) zueinander versetzt bzw. jeweils an der anderen Seite der Innenachse bzw. des Innenlaschenpaares (2, 2') angeordnet sind.

## Claims

1. An accumulation conveyor chain comprising a link chain with alternating inner and outer link plates coupled via hollow or solid hinge bolts, in which the sleeves are fixed in the inner link plates and the hinge bolts rotatably traversing the sleeves are fixed in the outer link plates, large-diameter conveyor rollers being mounted on sleeves predetermined along the chain length and smaller rollers being mounted at both sides on hinge bolts extended outwardly beyond their sleeves, characterized in that in each case an inner link plate or a pair of inner link plates (2, 2') is disposed in the longitudinal center of the two sleeves (3, 4), which are adjacent in the longitudinal direction of the chain, at a distance from the outer link plates (1) and that a conveyor roller (R) is disposed between the inner link plate or the pair of inner link plates (2, 2') and the outer link plate (1) at at least one outer side of the inner link plate or the pair of inner link plates (2, 2').

2. An accumulation conveyor chain according to claim 1, **characterized in** that the contour of the inner link plate or the pair of inner link plates (2, 2') overlaps the contour of the conveyor roller (R) on the sleeve (4) on the next following inner link plate or pair of inner link plates (2, 2').

3. An accumulation conveyor chain according to at least one of claims 1 and 2, **characterized in** that for the pull-off protection of each roller (L), the free end (7) of the extended hinge bolt (6) is formed directly at the front side (8) of the roller (L) in thickened fashion by means of cold forming, e.g. by means of upsetting, riveting or the like.

4. An accumulation conveyor chain according to claim 3, **characterized in** that the free end (7) is cold formed by means of upsetting in at least two diameter planes (12) that are staggered with respect to each other about the axis of the hinge bolt (6) (e.g. multiple roof-type riveting).

5. An accumulation conveyor chain according to claims 1 to 7 [sic], **characterized in** that liners or sleeves made of materials with self-lubricating properties, such as plastic material, ceramics or sintered material are provided between components of the accumulation conveyor chain (S), which are movable relative to each other.

6. An accumulation conveyor chain according to claim 1, **characterized in** that the inner link plate or the pair of inner link plates (2') with the two sleeves (3', 4') is an integral shaped part produced by pressing, extruding, forging, swaging, sintering, or the like.

7. An accumulation conveyor chain according to at least one of claims 1 to 6, **characterized in** a single conveyor roller (R) is provided per sleeve (4), and from one link to the other one the conveyor rollers (R) are disposed in staggered fashion relative to each other or at the respective other side of the inner axis or the pair of inner link plates (2, 2').

## Revendications

1. Chaîne de convoyeur à accumulation comprenant une chaîne articulée comportant des maillons intérieurs et extérieurs montés en alternance, accouplés les uns aux autres par l'intermédiaire d'axes d'articulation creux ou pleins, où des douilles sont fixées dans les maillons intérieurs, et où les axes d'articulation, qui tournent dans et traversent les douilles, sont fixés sur les maillons extérieurs, des galets convoyeurs de grand diamètre étant montés sur dès douilles prédéterminées réparties sur la longueur de la chaîne, et des galets de roulement plus petits étant montés des deux côtés sur les axes d'articulation prolongés au-delà de leurs douilles, caractérisée en ce que respectivement un maillon intérieur ou un couple de maillons intérieurs (2, 2') est disposé longitudinalement au milieu des deux douilles (3, 4) juxtaposées dans le sens longitudinal de la chaîne, à distance des maillons extérieurs (1), et en ce qu'un galet convoyeur (R) est disposé entre le maillon intérieur ou le couple de maillons intérieurs (2, 2') et le maillon extérieur (1), sur au moins un côté extérieur du maillon intérieur ou de la paire de maillons intérieurs (2, 2').

2. Chaîne de convoyeur à accumulation selon la revendication 1, caractérisée en ce que les contours du maillon intérieur ou du couple de maillons intérieurs (2, 2') et les contours du galet convoyeur (R) monté sur la douille (4) du maillon intérieur suivant ou du couple de maillons intérieurs suivant se recouvrent.

3. Chaîne de convoyeur à accumulation selon l'une des revendications 1 et 2, caractérisée en ce que, pour protéger chaque galet de roulement (L) contre l'arrachement, l'extrémité libre (7) de l'axe d'articulation plus long (6) est élargie directement par déformation à froid, par exemple par refoulement, rivetage ou similaire.

4. Chaîne de convoyeur à accumulation selon la revendication 3, caractérisée en ce que l'extrémité libre (7) est déformée à froid par refoulement dans au moins deux plans diamétraux (12) décalés l'un par rapport à l'autre autour de l'axe géométrique de l'axe d'articulation (6) (par exemple par rivetage multiple en "toit").

5. Chaîne de convoyeur à accumulation selon l'une des revendications 1 à 4, caractérisée en ce que des revêtements ou coussinets faits en matériaux présentant des propriétés autolubrifiantes, tels que des matières plastiques, des céramiques ou des matériaux frittés, sont prévus entre les composants de la chaîne de convoyeur à accumulation (S), qui peuvent se déplacer les uns par rapport aux autres.

6. Chaîne de convoyeur à accumulation selon la revendication 1, caractérisée en ce que le maillon intérieur ou le couple de maillons intérieurs (2') équipé des deux douilles (3', 4') est une pièce monobloc réalisée par estampage, formage par fluage, forgeage, matriçage, frittage ou similaire.

7. Chaîne de convoyeur à accumulation selon l'une au moins des revendications 1 à 6, caractérisée en ce qu'un seul galet convoyeur (R) est prévu sur chaque douille (4), et que les galets convoyeurs (R) sont disposés, d'une articulation à l'autre, en alternance, ou d'un côté, puis de l'autre du maillon intérieur ou couple de maillons intérieurs (2, 2').
